# EUROPEAN PATENT SPECIFICATION

(11) **EP 2 813 777 B1**
(45) Date of publication and mention of the grant of the patent: **23.05.2018**
(21) Application number: 13746185.1
(22) Date of filing: 06.02.2013
(51) Int. Cl.: F24F 13/14, F24F 13/06, F24F 13/20, B29C 45/00, F24F 13/22, F24F 1/00

(54) **INDOOR UNIT**
INNENRAUMEINHEIT
UNITÉ INTÉRIEURE

(30) Priority: 10.02.2012 JP 2012027789
(43) Date of publication of application: 17.12.2014
(73) Proprietor: Daikin Industries, Ltd., Osaka-shi, Osaka 530-8323 (JP)
(72) Inventor: MICHITSUJI, Yoshiharu, Osaka 530-8323 (JP)
(74) Representative: Hoffmann Eitle
(86) International application number: PCT/JP2013/000645
(87) International publication number: WO 2013/118497

(56) References cited:
- WO-A1-2007/012163
- JP-A- H08 320 133
- JP-A- 2003 021 387
- JP-A- 2006 129 233
- JP-A- 2007 101 029
- JP-A- 2010 065 877
- JP-A- 2011 099 613

## Description

### Technical Field

The present invention relates to an indoor unit including a louver provided in an air outlet.

### Background Art

There has been known an indoor unit including a louver (a wind direction plate) provided in an air outlet in order to adjust a blowing-out direction of the air blown out from the air outlet. In general, the louver has a flat shape as disclosed in, for example, Patent Document 1. An angle of the louver is adjusted by a motor.

Incidentally, when a difference between a direction of an air flow flowing in to the vicinity of a leading edge of the louver and the blowing-out direction adjusted by the louver is large (when a difference between the air flow direction and the direction of the louver is large), separated air flows tend to be produced on the surface of the louver. When separated air flows are produced during a cooling operation, warm air in a room is drawn into the louver side. Therefore, dew condensation tends to occur on the surface of the louver cooled by the blowing-out air flow.

To suppress the separation of the air flow, for example, the louver could be formed to have a blade shape. Specifically, a peak position of a blade thickness is present in a region on a leading edge side of the blade-shaped louver. The blade thickness has a shape in which the blade thickness gradually increases from the leading edge to the peak position and gradually decreases from the peak position toward a trailing edge side. In the louver having such a blade shape, the air flow flowing into the vicinity of the leading edge tends to flow along the surface (a curved surface) of the louver. Therefore, the separated airflows may be less easily produced on the surface of the louver.

However, when the blade-shaped louver is molded using molding means such as injection molding, there is a problem in that sink marks tend to occur in the region on the leading edge side where the peak of the blade thickness is located and the thickness is large.

Patent Document 1: Japanese Patent Application Laid-open No. H10-103702

Moreover, WO2007/012163 A1 discloses an evaporator unit with an elongate discharge opening and including a closure assembly for defining the boundaries of the discharge opening and providing vanes and a louver structure for selectively varying the direction of the air discharge flow, wherein an elongate body is secured to a back plate of the unit, a plurality of vanes are secured to the body by way of a snap fit, and groups of vanes are selectively set at variable angles by use of a gang bar, a plurality of brackets are secured to the body and have a pair of arms extending therefrom, one arm has a snap-fit slot into which a post of a horizontal louver may be installed and the other arm has a surface against which one end of the drain pan is made to rest in an assembled position, and wherein the horizontal louver is connected to a drive motor for continuous oscillation of the discharged air in a vertical direction. WO 2007/012163 A1 thereby discloses an indoor unit according to the preamble of claim 1.

### Summary of the Invention

It is an object of the present invention to provide an indoor unit including a louver in which separated air flow production is suppressed and sink marks due to molding are suppressed from occurring.

An indoor unit of the present invention includes: a casing including an air outlet; and a louver including a first surface located on one side in a thickness direction and a second surface located on the other side in the thickness direction, the louver adjusting a blowing-out direction of the air blown out from the air outlet. A peak of a blade thickness is present in a region on a leading edge side in the louver. The blade thickness in the region on the leading edge side gradually increases from the leading edge toward a position of the peak of the blade thickness and gradually decreases from the position of the peak of the blade thickness toward a trailing edge side of the louver. On the second surface of the louver, a plurality of grooves recessed toward the first surface side and extending in a direction crossing an air flow direction are provided side-by-side in the air flow direction. A peak of a groove depth in the plurality of grooves is present in the region on the leading edge side in the louver. The groove depths in the plurality of grooves gradually increase from the leading edge side toward a position of the peak of the groove depth and gradually decrease from the position of the peak of the groove depth toward the trailing edge side. The position of the peak of the groove depth is provided in a region corresponding to the position of the peak of the blade thickness. Preferred embodiments are defined in the dependent claims.

### Brief Description of the Drawings

Fig. 1 is a perspective view showing an indoor unit according to an embodiment of the present invention.
Fig. 2 is a sectional view showing the indoor unit shown in Fig. 1.
Fig. 3 is a perspective view showing a louver in the indoor unit.
Fig. 4A is a rear view showing the louver, Fig. 4B is an IVB-IVB line sectional view of Fig. 4A, and Fig. 4C is a side view showing the louver.
Fig. 5 is a V-V line sectional view of Fig. 4A.
Fig. 6 is an enlarged sectional view of a part of Fig. 5.

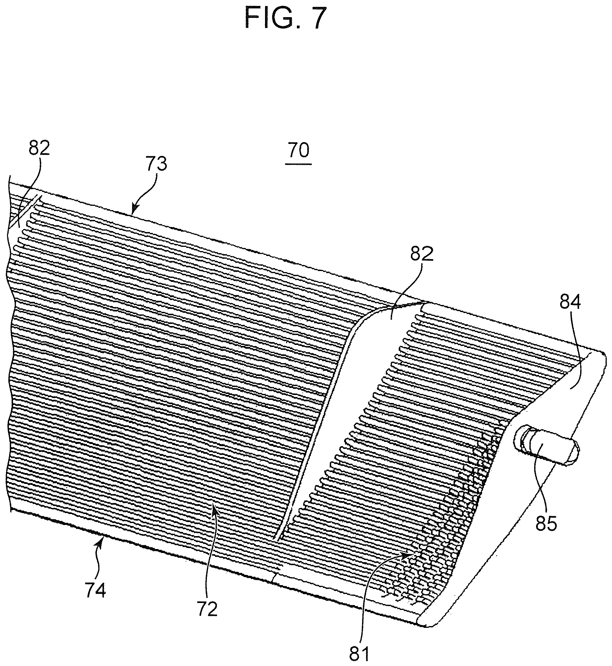

Fig. 7 is an enlarged perspective view of a part of the louver.
Fig. 8 is a VIII-VIII line sectional view of Fig. 4A.
Fig. 9 is a perspective view showing a state before the louver is attached to an air outlet.
Fig. 10 is a perspective view showing a modification of the louver.

### Description of Embodiments

An indoor unit 10 according to an embodiment of the present invention is explained in detail below with reference to the drawings.

### <General structure of the indoor unit>

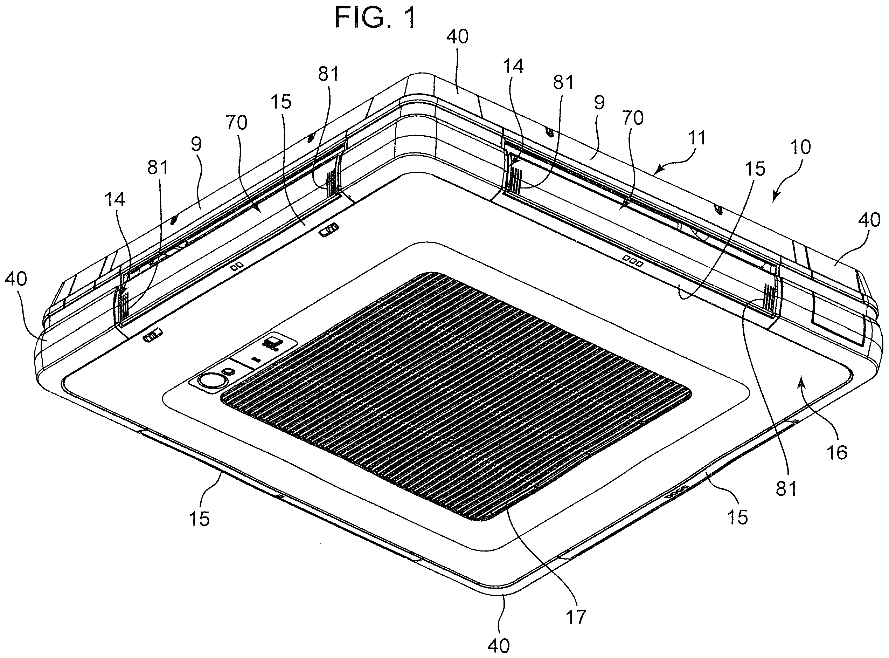

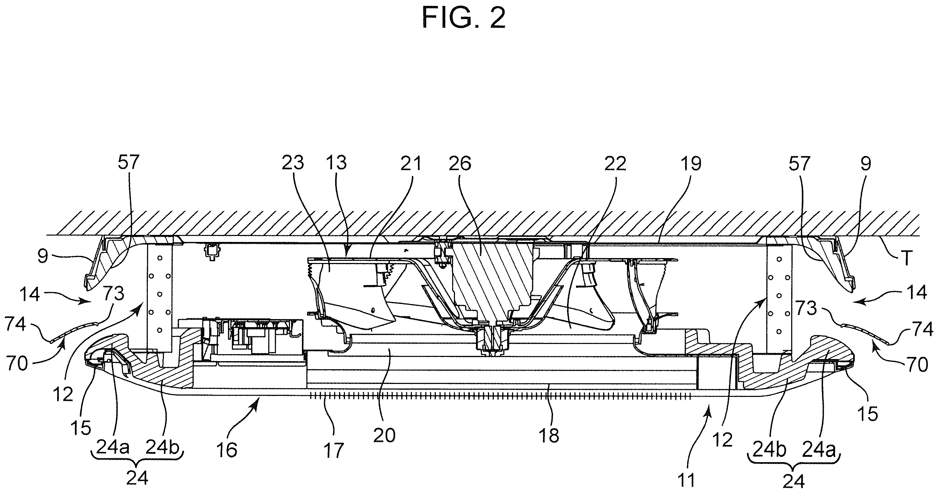

As shown in Fig. 1 and Fig. 2, the indoor unit 10 according to this embodiment is an indoor unit of a ceiling suspension type set to be suspended from a ceiling surface T (see Fig. 2). The indoor unit 10 includes a casing 11 having a rectangular parallelepiped shape, a heat exchanger 12 annularly arranged in the casing 11, a fan 13 set on the inner side of the heat exchanger 12, and a drain pan 24 provided below the heat exchanger 12.

The casing 11 has a rectangular shape in bottom view. The casing 11 includes a decorative plate 16 (a lower surface plate 16) including a suction grille 17, a top plate 19, four corner covers 40 located between the decorative plate 16 and the top plate 19, four upper decorative frames 9 (upper frames 9) extending in the horizontal direction among the corner covers 40 adjacent to one another, and four lower decorative frames 15 (lower frames 15) extending in the horizontal direction among the corner covers 40 adjacent to one another.

A filter 18 is arranged between the suction grille 17 and the fan 13. Air outlets 14 are respectively provided in four sidewalls of the casing 11. The upper decorative frames 9 are provided above the air outlets 14 corresponding thereto. The lower decorative frames 15 are provided below the air outlets 14 corresponding thereto. Heat insulators 57 are arranged on the inner sides of the upper decorative frames 9 along the upper decorative frames 9 and the top plate 19 continuing to the upper decorative frames 9. The heat insulators 57 are formed of foamed resin such as foamed polystyrene.

As the heat exchanger 12, for example, a cross fin type can be used in which a large number of tabular fins are attached to a plurality of heat transfer pipes, which are arranged in parallel to one another, in an orthogonal state. However, the heat exchanger 12 is not limited to this. The heat exchanger 12 functions as an evaporator during a cooling operation and functions as a condenser during a warming operation.

The drain pan 24 collects drain water generated in the heat exchanger 12. The drain pan 24 is formed of foamed resin such as foamed polystyrene. The drain pan 24 includes a storing section 24b located right under the heat exchanger 12 and capable of temporarily storing the drain water and a side end 24a located further on the air outlets 14 side than the storing section 24b and forming a part of lower edge sections of the air outlets 14. The side end 24a is provided on the inner side (upper side) of the lower decorative frame 15.

As the fan 13, for example, a centrifugal fan (a turbo fan), a diagonal flow fan, or the like can be used. The fan 13 includes an impeller including a circular hub 21, a circular shroud 22 including an air introducing opening in the center, and a plurality of blades 23 retained between the hub 21 and the shroud 22. A rotating shaft of a fan motor 26 is connected to the hub 21 of the fan 13. On the lower side of the shroud 22, a bell mouth 20 for guiding the indoor air to the fan 13 is provided. The bell mouth 20 includes, in the center, an opening slightly smaller than the opening of the shroud 22. When the impeller of the fan 13 rotates, the air in the room is sucked into the casing 11 from the suction grille 17 of the decorative plate 16 and, after passing through the heat exchanger 12, blown out to sides from the air outlets 14.

The air outlets 14 are opening sections, the shape and the size of which are marked out by members that form the casing 11. Specifically, in this embodiment, the air outlets 14 are substantially rectangular opening sections marked out by the corner covers 40 located on both sides of the air outlets 14, the upper decorative frame 9, and the lower decorative frame 15. The air outlets 14 have a laterally long shape, an opening dimension in the horizontal direction of which is longer than an opening dimension in the up-down direction. Louvers (wind direction plates) 70 that adjust a blowing-out direction of the air are provided in the air outlets 14.

As shown in Fig. 1, the louvers 70 have laterally long shapes extending along the longitudinal directions of the air outlets 14 corresponding thereto. The four louvers 70 have shapes similar to one another. The louver 70 is specifically explained below.

### <Louver>

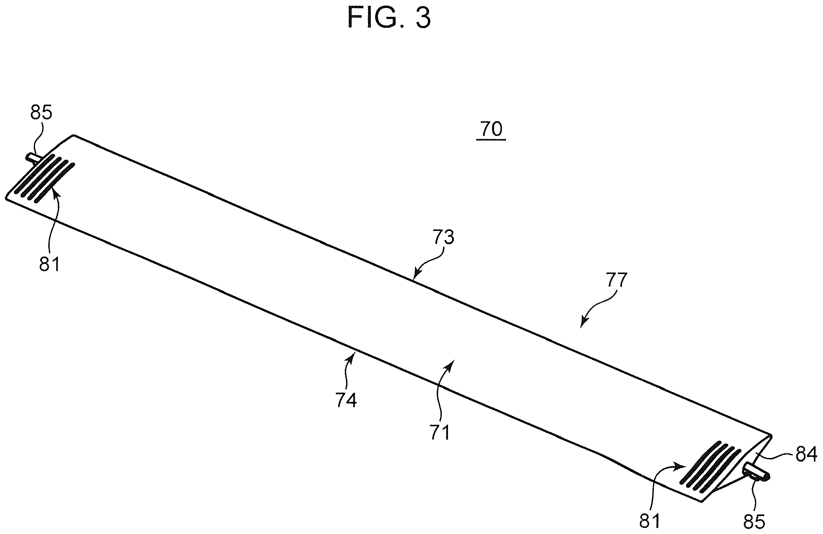

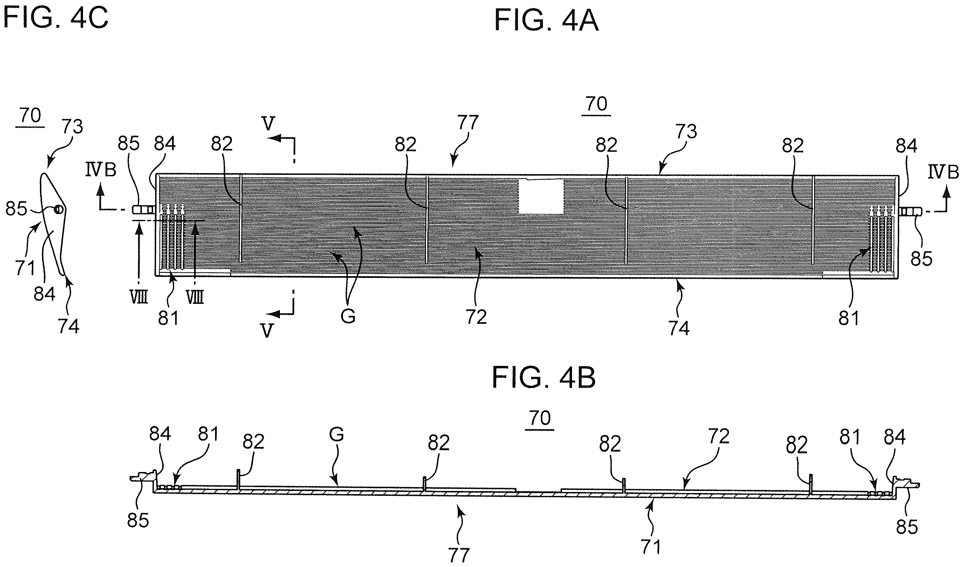

As shown in Fig. 3 and Figs. 4A to 4C, the louver 70 includes a louver main body 77 having a laterally long substantially rectangular shape in side view, a plurality of guiding walls 82 and 84 for guiding an air flow, and a pair of shaft sections 85. The louver main body 77 includes a leading edge 73, a trailing edge 74, a first surface 71 located on one side in a thickness direction of the louver main body 77 and a second surface 72 located on the other side in the thickness direction. The plurality of guiding walls 82 and 84 include a pair of guiding walls 84 erected in a direction orthogonal to the longitudinal direction of the louver main body 77 at both ends in the longitudinal direction of the louver main body 77 and one or a plurality of guiding walls 82 (in this embodiment, four guiding walls 82) provided between the guiding walls 84 and erected from the second surface 72 in the same direction as the guiding walls 84.

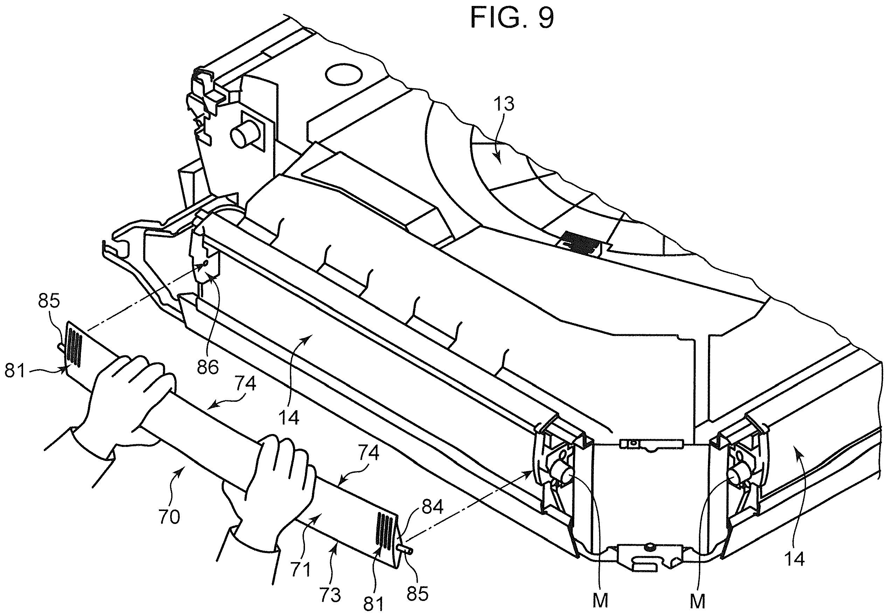

One shaft section 85 projects from one guiding wall 84 to the outer side of the louver main body 77. The other shaft section 85 projects from the other guiding wall 84 to the outer side of the louver main body 77. The shaft sections 85 are located on the same rotation axis. The one shaft section 85 is connected to a not-shown rotating shaft of a motor M (see Fig. 9). The other shaft section 85 is supported by a bearing section 86 (see Fig. 9) provided in the vicinity of the air outlet 14. The louver 70 is turned about the rotation axis by the motor M and adjusted to a desired angle.

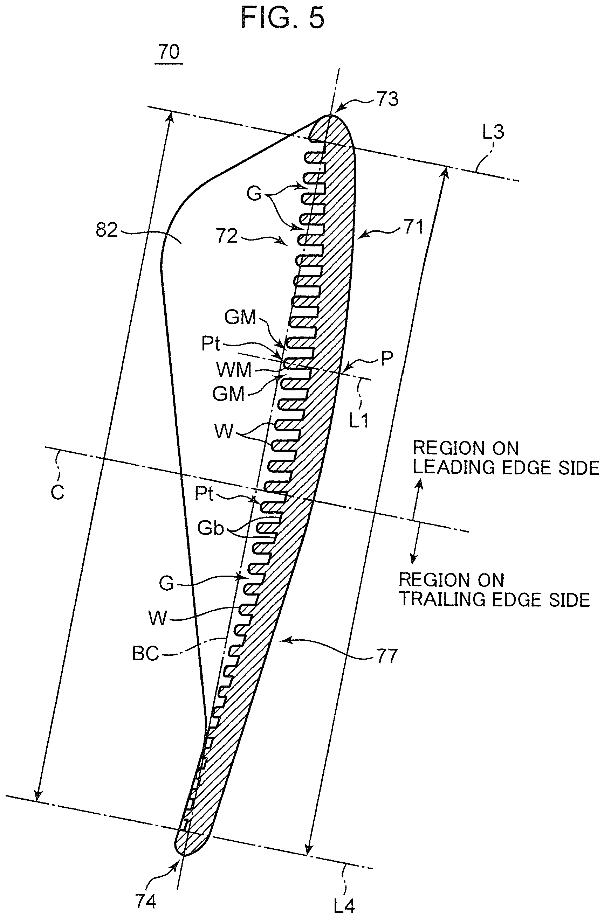

A region on the leading edge 73 side in the louver main body 77 has a peak of a blade thickness T in a cross section (a cross section shown in Fig. 5) of the louver main body 77 taken along a plane perpendicular to the longitudinal direction of the louver main body 77. In Fig. 5, the region on the leading edge 73 side has a shape in which the blade thickness T gradually increases from the leading edge 73 toward a position of the peak of the blade thickness T and the blade thickness T gradually decreases from the position of the peak of the blade thickness T toward the trailing edge 74 side.

In this embodiment, the louver main body 77 has a blade shape. The blade shape of the louver main body 77 means a shape in which, in the cross section shown in Fig. 5, a peak of the blade thickness T is present in the region on the leading edge 73 side, the blade thickness T gradually increases from the leading edge 73 toward the position of the peak of the blade thickness T, and the blade thickness T gradually decreases from the position of the peak of the blade thickness T toward the trailing edge 74 side.

The region on the leading edge 73 side in the louver main body 77 means, in the cross section shown in Fig. 5, a region further on the leading edge 73 side than a straight line C that passes a point equally dividing a blade chord BC, which is a line segment between the leading edge 73 and the trailing edge 74 in a straight line passing the leading edge 73 and the trailing edge 74, and is orthogonal to the blade chord BC. The region on the trailing edge 74 side in the louver main body 77 means a region further on the trailing edge 74 side than the straight line C.

As shown in Fig. 5, the first surface 71 is a curved surface smoothly curving and convex to the outer side. As shown in Fig. 1, when the indoor unit 10 is in a stopped state, an angle of the louver main body 77 is adjusted such that the louver main body 77 closes the air outlet 14. The curved surface of the first surface 71 plays a role of a decorative surface (an outer surface) exposed to the outer side.

A large number of grooves G are provided on the second surface 72. The grooves G are recessed toward the first surface 71 side. Each of the grooves G extends in a direction orthogonal to an air flow direction. The large number of grooves G are provided side-by-side in the air flow direction in a state in which the louver 70 adjusts a blowing-out direction of the air during the cooling or warming operation of the indoor unit 10 (e.g. a state of the louver 70 shown in Fig. 2). That is, the large number of grooves G are provided side-by side in a direction from the leading edge 73 toward the trailing edge 74. The second surface 72 has a structure in which concaves and convexes are repeated in the direction from the leading edge 73 to the trailing edge 74 because the large number of grooves G are provided. In this embodiment, a direction in which the grooves G extend is directed to a direction substantially orthogonal to the air flow direction. However, the direction is not limited to this and may slightly incline with respect to the air flow direction. In this embodiment, the grooves G extend in a direction parallel to the longitudinal direction of the louver main body 77. In this embodiment, the grooves G extend from one side end to the other side end of the second surface 72. However, the grooves G do not always have to be provided to the side ends.

Note that the air flow direction is a direction in which the air flows when the air passes through the air outlet 14. Therefore, the air flow direction does not strictly mean one direction and has slight variation. For example, in this embodiment shown in Fig. 2, the air flow direction is a direction inclining downward with respect to the horizontal direction or the horizontal direction and is a direction from the heat exchanger 12 to the air outlet 14.

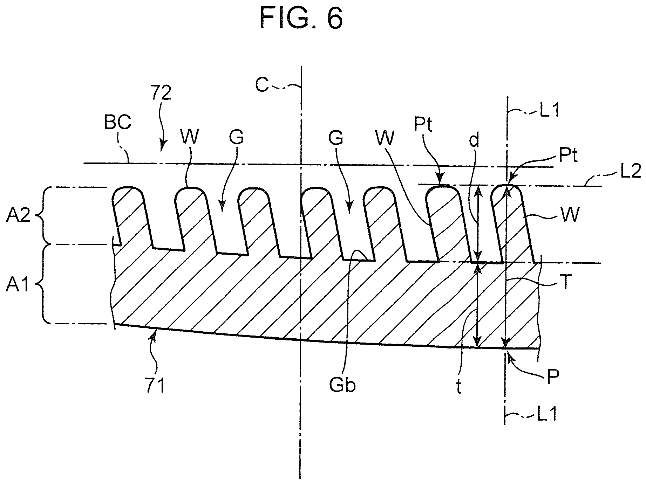

As shown in Fig. 6, the louver main body 77 includes a groove forming region A2 on the second surface 72 side where the large number of grooves G are formed and a base region A1 that is located on the opposite side (the first surface 71 side) in the thickness direction with respect to the groove forming region A2 and where the grooves G are not formed. The groove forming region A2 includes a large number of wall sections W erected from the base region A1. The wall sections W adjacent to one another are provided a space apart from one another, whereby the grooves G are formed. The wall sections W extend in a direction same as the direction in which the grooves G extend.

On the second surface 72 shown in the sectional view of Fig. 5, when an imaginary curved line that smoothly connects distal ends (tops) Pt of all the wall sections W in order is drawn, an imaginary louver shape formed by the imaginary curved line and the first surface 71 is drawn. In the imaginary louver shape, the blade thickness smoothly increases and decreases from the leading edge 73 to the trailing edge 74. The louver main body 77 in this embodiment has a structure in which the large number of grooves G are provided on the second surface 72 in the imaginary louver shape.

In this embodiment, since the grooves G extend in the direction orthogonal to the air flow direction as explained above, an air flow flowing along the second surface 72 is less easily affected by the grooves G. That is, the air flow flowing along the second surface 72 is suppressed from entering the grooves G or entering the grooves G and flowing along the grooves G.

In particular, in this embodiment, the grooves G extend in the direction parallel to the longitudinal direction of the louver main body 77 (a direction substantially perpendicular to the air flow direction). Therefore, compared with when the grooves G extend in a direction inclining with respect to the longitudinal direction of the louver main body 77, it is possible to further reduce the influence of the grooves G on the air flow flowing along the second surface 72. Therefore, in the louver 70 in this embodiment, an effect close to the separation suppression effect obtained in the case of the imaginary louver shape can be obtained.

In the louver 70 in which the larger number of grooves G are provided on the second surface 72 as in this embodiment, the blade thickness T of the louver main body 77 is defined as explained below. That is, in a cross section of the louver 70 shown in Fig. 6, a straight line L1 passing the tops Pt of the wall sections W and orthogonal to the blade chord BC is drawn. A distance between an intersection P where the straight line L1 crosses the first surface 71 and the tops Pt is represented as blade thickness T.

The peak of the blade thickness T means a portion where the blade thickness T is the largest when the blade thicknesses T in all the wall sections W are compared. In this embodiment, the peak of the blade thickness T is present in a wall section WM shown in Fig. 5 among the plurality of wall sections W. The peak of the blade thickness T is located in the region on the leading edge 73 side.

A groove depth d in the groove G is defined as explained below. That is, in the cross section of the louver 70 shown in Fig. 6, a straight line L2 passing the tops Pt of the wall sections W adjacent to each other is drawn. A distance between the straight line L2 and a bottom section Gb of the groove G (a distance in a direction orthogonal to the blade chord BC) is represented as groove depth d.

A peak of the groove depth d in the plurality of grooves G is present in the region on the leading edge 73 side. The groove depths d in the plurality of grooves G gradually increase from the leading edge 73 side toward a position of the peak of the groove depth d and gradually decrease from the position of the peak of the groove depth d toward the trailing edge 74 side. In this embodiment, the groove depths d of the grooves G provided in the region on the leading edge 73 side and the region on the trailing edge 74 side among the plurality of grooves G increase according to an increase in the blade thickness T and decrease according to a decrease in the blade thickness T. However, the groove depths d are not limited to this.

The peak of the groove depth d means a portion where the groove depth d is the largest when the groove depths d in all the grooves G are compared. A position of the peak of the groove depth d is provided in a region corresponding to the position of the peak of the blade thickness T. An example of the corresponding region is as explained below. That is, in this embodiment, as shown in Fig. 5, the peak of the groove depth d is present in one or both of two grooves GM on both sides of the wall section WM in which the peak of the blade thickness T is present. In this way, in this embodiment, the position of the peak of the blade thickness T and the position of the peak of the groove depth d are provided in the positions adjacent to each other. However, the position of the peak of the groove depth d may be lightly shifted to the leading edge 73 side or the trailing edge 74 side with respect to the position of the peak of the blade thickness T.

Specifically, the peak of the groove depth d may be present in the groove G located further on the leading edge 73 side by one to three grooves G than the groove GM adjacent to the leading edge 73 side with respect to the wall section WM in which the peak of the blade thickness T is present. The peak of the groove depth d may be present in the groove G located further on the trailing edge 74 side by about one to three grooves G than the groove GM adjacent to the trailing edge 74 side with respect to the wall section WM in which the peak of the blade thickness T is present.

In this embodiment, the example is explained in which the peak of the blade thickness T is present in one wall section WM. However, the peak of the blade thickness T is not limited to this. The peak of the blade thickness T may be present in, for example, two or more wall sections WM. In this case, the peak of the groove depth d is present in the groove G adjacent to any one of the plurality of wall sections WM or present in the groove G located further on the leading edge 73 side or the trailing edge 74 side by about one to three grooves G than the adjacent groove G.

A base thickness t in the base region A1 is defined as explained below. That is, in the cross section of the louver 70 shown in Fig. 6, a distance, in the direction orthogonal to the blade chord BC, between the bottom section Gb of the groove G and the first surface 71 is represented as base thickness t.

In this embodiment, in the cross section shown in Fig. 5, the base region A1 is designed such that the base thickness t is uniform as much as possible. That is, in the louver main body 77 having the blade shape, the blade thickness T in the region on the leading edge 73 side and the blade thickness T in the region on the trailing edge 74 side are considerably different. However, since the large number of grooves G are provided on the second surface 72 such that the groove depths d increase and decrease according to an increase and a decrease in the blade thickness T, an increase and a decrease in the base thickness t are suppressed. Specifically, a difference between a maximum and a minimum of the base thickness t is smaller than a difference between a maximum and a minimum of the groove depths d in the plurality of grooves G. The difference between the maximum and the minimum of the base thickness t is smaller than a difference between a maximum and a minimum of the blade thickness T.

In this embodiment, the base thickness t is substantially uniform from the leading edge 73 side to the trailing edge 74 side. However, the base thickness t is not limited to this. For example, the base thickness t may be associated with the increase and the decrease in the blade thickness T. Specifically, a form can be illustrated in which the base thickness t is reduced in a region where the blade thickness T is large and the base thickness t is increased in a region where the blade thickness T is small. That is, the base thickness t of the region corresponding to the position of the peak of the blade thickness T is set smaller than the base thickness t of the region further on the leading edge 73 side and the base thickness t of the region further on the trailing edge 74 side than the region corresponding to the position of the peak of the blade thickness T. Consequently, it is possible to more effectively suppress occurrence of sink marks near the position of the peak of the blade thickness T. In this case, the maximum of the base thickness t is more preferably located in the region, on the trailing edge 74 side, in which the blade thickness T is generally smaller than that in the region on the leading edge 73 side.

Note that, when the base thicknesses t are compared, the base thicknesses t are compared in the other region (a region between a straight line L3 and a straight line L4 in Fig. 5) excluding the leading edge 73 and a region in the vicinity of the leading edge 73 where the grooves G are not provided and the trailing edge 74 and a region in the vicinity of the trailing edge 74 where the groove G are not provided.

The width of the grooves G (an interval between the wall sections W in a direction parallel to the blade chord BC) and an interval between the grooves G are not particularly limited. However, in this embodiment, the width of the grooves G and the interval between the grooves G are set to the same degree as the thickness of the wall section W (the thickness of the wall section W in the direction parallel to the blade chord BC). The width of the grooves G and the interval between the grooves G are preferably set to be small to a degree for not excessively causing vortex flows in the grooves G. In this embodiment, as shown in Fig. 5, thirty-four grooves G are provided at substantially equal intervals from the leading edge 73 to the trailing edge 74. The number of grooves G is set to, for example, about several dozens according to the width of the louver main body 77.

The width of the grooves G is preferably set in a range of 0.4 to 0.6 times of the base thickness t (0.4t<width of grooves<0.6t). Note that, when the base thickness t is not constant in the entire louver main body 77, the width of the grooves G can be set in the above range with respect to the base thickness t in portions adjacent to the grooves G in the thickness direction.

As a specific example of the width of the grooves G, the width of the grooves G can be set to about 0.7 to 1.5 mm. However, the width of the grooves G is not limited to this. Since such a plurality of grooves G are provided, separation of the air flow is effectively suppressed on the second surface 72. Even when dew condensation occurs on the second surface 72, water of the due condensation can be effectively retained by the plurality of grooves G.

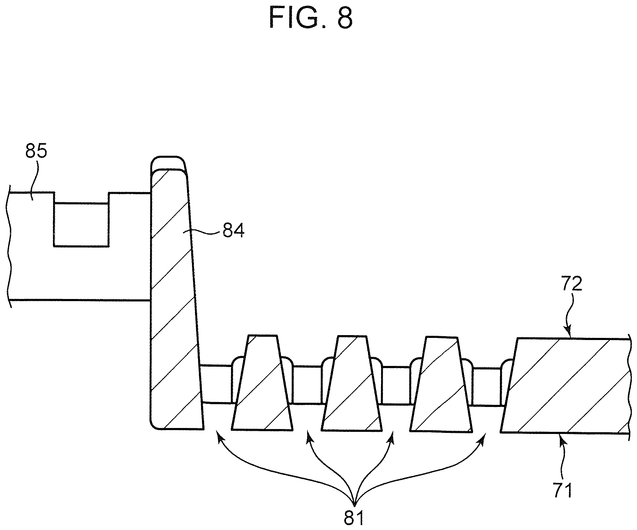

As shown in Fig. 3, Fig. 4A, and Fig. 8, a plurality of slits 81 piercing through the louver main body 77 are provided at both ends of the louver main body 77. Since the slits 81 are provided, dew condensation on the surface of the louver main body 77 is suppressed. The slits 81 are long holes extending in the direction orthogonal to the longitudinal direction of the louver 70 (the longitudinal direction of the louver main body).

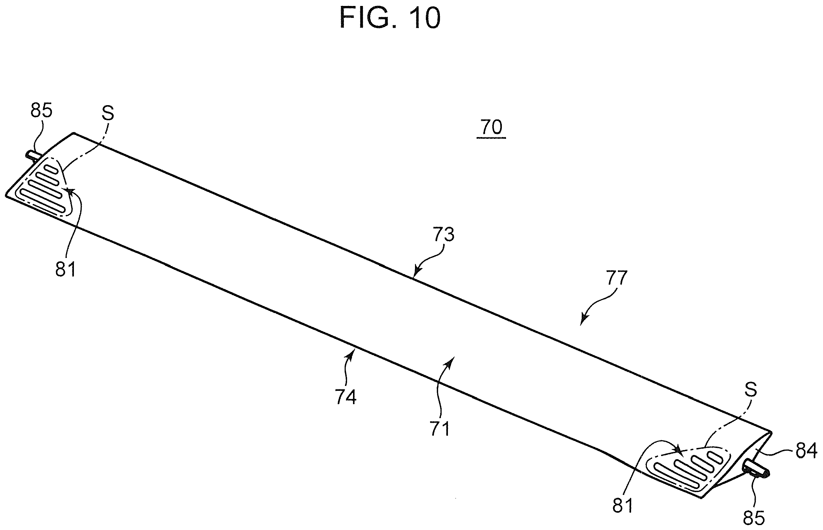

The plurality of slits 81 may be provided in the louver main body 77, for example, in a form shown in Fig. 10. In a modification shown in Fig. 10, the plurality of slits 81 are concentratedly provided in regions S where dew condensation tends to occur. These regions S are located at both ends of the louver main body 77. The regions S are located on the trailing edge 74 side in the louver main body 77.

As indicated by an alternate long and short dash line in Fig. 10, the regions S expand in the longitudinal direction of the louver main body 77 toward the trailing edge 74 side. As in this modification, each of the plurality of slits 81 may be a long hole extending in the longitudinal direction of the louver main body 77. In this modification, the length of the slits 81 on the trailing edge 74 side (an opening length in the longitudinal direction) is larger than the length of the slits 81 on the leading edge 73 side.

The louver 70 is formed of, for example, synthetic resin and is deflectively deformable. Therefore, as shown in Fig. 9, an operator can attach the louver 70 to the air outlet 14 and detach the louver 70 from the air outlet 14 while deflectively deforming the louver 70.

As explained above, in this embodiment, the peak of the blade thickness T is provided in the region on the leading edge 73 side in the louver 70. The blade thickness T gradually increases from the leading edge 73 toward the position of the peak of the blade thickness T and gradually decreases from the position of the peak of the blade thickness T toward the trailing edge 74 side. Therefore, the air flow flowing into the vicinity of the leading edge 73 tends to flow along the first surface 71 and the second surface 72 of the louver 70. Consequently, it is possible to suppress separation of the air flow flowing on the surface of the louver 70.

In this embodiment, on the second surface 72, the plurality of grooves G recessed toward the first surface 71 side and extending in a direction orthogonal to the air flow direction are provided side-by-side in the air flow direction. Therefore, by adopting the shape explained above, the thickness of the region on the leading edge 73 side, where the blade thickness T is large, is partially reduced in parts where the plurality of grooves G are provided. In this way, in the region on the leading edge 73 side, the parts having the partially reduced thickness are arranged along the air flow direction while the separation suppression effect for the air flow is obtained.

Moreover, in this embodiment, the peak of the groove depth d is provided in the region on the leading edge 73 side. The groove depths d in the plurality of grooves G gradually increase from the leading edge 73 side toward the position of the peak of the groove depth d and gradually decrease from the position of the peak of the groove depth d toward the trailing edge 74 side. The position of the peak of the groove depth d is provided in the position corresponding to the position of the peak of the blade thickness T. That is, in the region on the leading edge 73 side, the groove depths d in the plurality of grooves G have the increasing and decreasing tendency similar to the increasing and decreasing tendency of the blade thickness T. Since the grooves G having the groove depths d corresponding to the size of the blade thickness T are provided, in the region on the leading edge 73 side, it is possible to effectively suppress sink marks from occurring.

In this embodiment, in the cross section shown in Fig. 5. the difference between the maximum and the minimum of the base thickness t, which is the thickness between the bottom sections Gb in the plurality of grooves G and the first surface 71, is smaller than the difference between the maximum and the minimum of the groove depths d in the plurality of grooves G. By setting the difference in the sizes of the groove depths d in the plurality of grooves G relatively large in this way, it is possible to reduce the difference in the sizes of the base thickness t in the louver 70. Consequently, it is easy to keep the base thickness t within a desired range in the entire louver 70. Therefore, it is possible to evenly obtain the sink mark suppression effect in the entire louver 70.

In this embodiment, in the region on the trailing edge 74 side in the louver 70, the blade thickness T gradually decreases toward the trailing edge 74 side. The position of the maximum of the base thickness t is located in the region on the trailing edge 74 side. The position of the minimum of the base thickness t is located in the region on the leading edge 73 side.

In the region on the leading edge 73 side, the plurality of grooves G are provided, whereby the parts having the partially reduced thickness are provided and suppression of sink marks is attained. However, compared with the region on the trailing edge 74 side side, a large number of parts having the large blade thickness T are present. Therefore, in this embodiment, the position of the maximum of the base thickness t is located in the region on the trailing edge 74 side where the blade thickness T is relatively small. On the other hand, the position of the minimum of the base thickness t is located in the region on the leading edge 73 side where the blade thickness T is relatively large. Consequently, it is possible to further suppress sink marks from occurring in the region on the leading edge 73 side in the louver 70.

Note that the present invention is not limited to the embodiment. Various alternations, improvements, and the like are possible without departing from the spirit of the present invention.

For example, in the embodiment, the indoor unit of the ceiling suspension type including the four air outlets is explained as an example. However, the present invention can also be applied to an indoor unit of the ceiling suspension type including one, two, or three air outlets. The present invention can also be applied to an indoor unit of a ceiling embedded type, an indoor unit of a wall mounting type, an indoor unit of a floor mounting type, and the like.

In the embodiment, the example is explained in which the difference between the maximum and the minimum of the base thickness t, which is the thickness between the bottom sections Gb in the plurality of grooves G and the first surface 71, is smaller than the difference between the maximum and the minimum of the groove depths d in the plurality of grooves G. However, the difference between the maximum and the minimum of the base thickness is not limited to this. The difference between the maximum and the minimum of the base thickness t may be substantially the same as the difference between the maximum and the minimum of the groove depths d or may be larger than the difference between the maximum and the minimum of the groove depths d.

In the embodiment, the example is explained in which, in the region on the trailing edge 74 side in the louver 70, the blade thickness T gradually decreases toward the trailing edge 74 side. However, the region on the trailing edge 74 side is not limited to this. The region on the trailing edge 74 side may include, for example, a part where the blade thickness T is constant or may include a part where the blade thickness T gradually increases toward the trailing edge 74 side.

In the embodiment, the example is explained in which the position of the maximum of the base thickness t is located in the region on the trailing edge 74 side and the position of the minimum of the base thickness t is located in the region on the leading edge 73 side. However, the position of the maximum of the base thickness t and the position of the minimum of the base thickness t is not limited to this. For example, the position of the maximum of the base thickness t may be located in the region on the leading edge 73 side and the position of the minimum of the base thickness t may be located in the region on the trailing edge 74 side. The base thickness t of the region on the leading edge 73 side and the base thickness t of the region on the trailing edge 74 side may be the same.

Note that the embodiment explained above is summarized as follows.

The indoor unit includes: a casing including an air outlet; and a louver including a first surface located on one side in a thickness direction and a second surface located on the other side in the thickness direction, the louver adjusting a blowing-out direction of the air blown out from the air outlet. A peak of a blade thickness is present in a region on a leading edge side in the louver. The blade thickness in the region on the leading edge side gradually increases from the leading edge toward a position of the peak of the blade thickness and gradually decreases from the position of the peak of the blade thickness toward a trailing edge side of the louver. On the second surface of the louver, a plurality of grooves recessed toward the first surface side and extending in a direction crossing an air flow direction are provided side-by-side in the air flow direction. A peak of a groove depth in the plurality of grooves is present in the region on the leading edge side in the louver. Respective groove depths in the plurality of grooves gradually increase from the leading edge side toward a position of the peak of the groove depth and gradually decrease from the position of the peak of the groove depth toward the trailing edge side. The position of the peak of the groove depth is provided in a region corresponding to the position of the peak of the blade thickness.

In this configuration, the peak of the blade thickness is present in the region on the leading edge side. The region on the leading edge side has the shape in which the blade thickness gradually increases from the leading edge toward the position of the peak of the blade thickness and gradually decreases from the position of the peak of the blade thickness toward the trailing edge side. Therefore, an air flow flowing into the vicinity of the leading edge tends to flow along the first surface and the second surface of the louver. Consequently, it is possible to suppress separation of the air flow flowing on the surface of the louver.

In this configuration, on the second surface of the louver, the plurality of grooves recessed toward the first surface side and extending in the direction crossing the air flow direction are provided side-by-side in the air flow direction. Therefore, the thickness of the region on the leading edge side, where the blade thickness is large, is partially reduced in parts where the plurality of grooves are provided. That is, the region on the leading edge side has a structure in which the parts having the partially reduced thickness are arranged along the air flow direction.

Moreover, in this configuration, in the region on the leading edge side, the position of the peak of the groove depth is provided in the region corresponding to the position of the peak of the blade thickness. The increasing and decreasing tendency of the groove depth corresponds to the increasing and decreasing tendency of the blade thickness. That is, this configuration has a characteristic that the groove depth is large in the part where the blade depth is large and the groove depth is small in the part where the blade depth is small. In this way, the louver includes the grooves having the groove depth corresponding to the size of the blade depth. Therefore, it is possible to effectively suppress sink marks from occurring in the region on the leading edge side.

Consequently, with this configuration, it is possible to suppress separation of the air flow flowing on the surface of the louver. Moreover, it is possible to suppress sink marks from occurring in the molded louver.

In the indoor unit, it is preferable that a difference between a maximum and a minimum of a base thickness, which is thickness between bottom sections in the plurality of grooves and the first surface, is smaller than a difference between a maximum and a minimum of the groove depths in the plurality of grooves.

With this configuration, by setting a difference in the sizes of the groove depth in the plurality of grooves relatively large, it is possible to reduce a difference in the sizes of the base thickness in the louver. It is possible to reduce a change in the base thickness in a region including the region on the leading edge side and the region on the trailing edge side. Consequently, it is easy to keep the base thickness in a desired range in the entire louver. Therefore, it is possible to evenly obtain the sink mark suppression effect in the entire louver.

In the indoor unit, it is preferable that, in the region on the trailing edge side in the louver, the blade thickness gradually decreases toward the trailing edge side, and a position of the maximum of the base thickness is located in the region on the trailing edge side and a position of the minimum of the base thickness is located in the region on the leading edge side.

In the region on the leading edge side, the plurality of grooves are provided, whereby the parts having the partially reduced thickness are provided and suppression of sink marks is attained. However, compared with the region on the trailing edge side side, a large number of parts having the large blade thickness are present. Therefore, in this embodiment, the position of the maximum of the base thickness is located in the region on the trailing edge side where the blade thickness is relatively small. On the other hand, the position of the minimum of the base thickness is located in the region on the leading edge side where the blade thickness is relatively large. Consequently, it is possible to further suppress sink marks from occurring in the region on the leading edge side in the louver.

### Explanation of Reference Numerals

- 10: Indoor unit
- 11: Casing
- 14: Air outlet
- 70: Louver
- 71: First surface
- 72: Second surface
- 73: Leading edge
- 74: Trailing edge
- 77: Louver main body
- d: Groove depth
- G: Groove
- T: Blade thickness
- t: Base thickness

## Claims

1. An indoor unit comprising:
a casing (11) including an air outlet (14); and
a louver (70) including a first surface (71) located on one side in a thickness direction and a second surface (72) located on the other side in the thickness direction, the louver (70) adjusting a blowing-out direction of air blown out from the air outlet (14), wherein
a peak of a blade thickness (T) is present in a region on a leading edge side in the louver (70), the blade thickness (T) in the region on the leading edge side gradually increases from the leading edge (73) toward a position of the peak of the blade thickness (T) and gradually decreases from the position of the peak of the blade thickness toward a trailing edge side of the louver (70), wherein on the second surface (72) of the louver (70), a plurality of grooves (G) recessed toward the first surface side and extending in a direction crossing an air flow direction are provided side-by-side in the air flow direction, **characterized in that**:
a peak of a groove depth (d) in the plurality of grooves (G) is present in the region on the leading edge side in the louver (70), the groove depths (d) in the plurality of grooves (G) gradually increase from the leading edge side toward a position of the peak of the groove depth (d) and gradually decrease from the position of the peak of the groove depth (d) toward the trailing edge side, and
the position of the peak of the groove depth (d) is provided in a region corresponding to the position of the peak of the blade thickness (T).

2. The indoor unit according to claim 1, wherein a difference between a maximum and a minimum of a base thickness (t), which is thickness between bottom sections in the plurality of grooves (G) and the first surface (71), is smaller than a difference between a maximum and a minimum of the groove depths (d) in the plurality of grooves (G).

3. The indoor unit according to claim 2, wherein
in the region on the trailing edge side in the louver (70), the blade thickness (T) gradually decreases toward the trailing edge side, and
a position of the maximum of the base thickness (t) is located in the region on the trailing edge side and a position of the minimum of the base thickness (t) is located in the region on the leading edge side.

## Patentansprüche

1. Innenraumeinheit, umfassend:
ein Gehäuse (11), das einen Luftauslass (14) beinhaltet; und
eine Luftklappe (70), die eine erste Oberfläche (71), die auf einer Seite in einer Dickenrichtung angeordnet ist, und eine zweite Oberfläche (72), die auf der anderen Seite in der Dickenrichtung angeordnet ist, beinhaltet, wobei die Luftklappe (70) eine Ausblasrichtung von Luft einstellt, die aus dem Luftauslass (14) geblasen wird, wobei
eine Spitze einer Schaufeldicke (T) in einem Bereich an einer Vorderkantenseite in der Luftklappe (70) vorliegt, wobei die Schaufeldicke (T) in dem Bereich an der Vorderkantenseite von der Vorderkante (73) in Richtung einer Position der Spitze der Schaufeldicke (T) allmählich zunimmt und von der Position der Spitze der Schaufeldicke in Richtung einer Hinterkantenseite der Luftklappe (70) allmählich abnimmt,
wobei an der zweiten Oberfläche (72) der Luftklappe (70) eine Vielzahl von Rillen (G) in Richtung der ersten Oberflächenseite ausgespart ist und sich in einer Richtung erstreckt, die eine Luftströmungsrichtung kreuzt und Seite an Seite in der Luftströmungsrichtung bereitgestellt ist,
**dadurch gekennzeichnet, dass**:
eine Spitze einer Rillentiefe (d) in der Vielzahl von Rillen (G) in dem Bereich an der Vorderkantenseite in der Luftklappe (70) vorhanden ist, wobei die Rillentiefen (d) in der Vielzahl von Rillen (G) von der Vorderkantenseite in Richtung einer Position der Spitze der Rillentiefe (d) allmählich zunehmen und von der Position der Spitze der Rillentiefe (d) in Richtung der Hinterkantenseite allmählich abnehmen, und
die Position der Spitze der Rillentiefe (d) in einem Bereich bereitgestellt ist, welcher der Position der Spitze der Schaufeldicke (T) entspricht.

2. Innenraumeinheit nach Anspruch 1, wobei eine Differenz zwischen einem Maximum und einem Minimum einer Grunddicke (t), die eine Dicke zwischen unteren Abschnitten in der Vielzahl von Rillen (G) und der ersten Oberfläche (71) ist, kleiner als eine Differenz zwischen einem Maximum und einem Minimum der Rillentiefen (d) in der Vielzahl von Rillen (G) ist.

3. Innenraumeinheit nach Anspruch 2, wobei
in dem Bereich an der Hinterkantenseite in der Luftklappe (70) die Schaufeldicke (T) in Richtung der Hinterkantenseite allmählich abnimmt, und
sich eine Position des Maximums der Grunddicke (t) in dem Bereich an der Hinterkantenseite befindet und sich eine Position des Minimums der Grunddicke (t) in dem Bereich an der Vorderkantenseite befindet.

## Revendications

1. Unité intérieure comprenant :
un boitier (11) incluant une sortie d'air (14) ; et
un déflecteur (70) incluant une première surface (71) située d'un côté dans une direction d'épaisseur et une seconde surface (72) située de l'autre côté dans la direction d'épaisseur, le déflecteur (70) ajustant une direction de soufflage d'air soufflé par la sortie d'air (14), dans laquelle
un pic d'une épaisseur de lame (T) est présent dans une région d'un côté de bord d'attaque dans le déflecteur (70), l'épaisseur de lame (T) dans la région du côté de bord d'attaque augmentant progressivement depuis le bord d'attaque (73) vers une position du pic de l'épaisseur de lame (T) et diminue progressivement depuis la position du pic de l'épaisseur de lame vers un côté de bord de fuite du déflecteur (70),
dans laquelle sur la seconde surface (72) du déflecteur (70), une pluralité de rainures (G) en retrait vers le côté de première surface et s'étendant dans une direction coupant une direction de flux d'air sont ménagées côte-à-côte dans la direction de flux d'air,
**caractérisée en ce que** :
un pic d'une profondeur de rainure (d) dans la pluralité de rainures (G) est présent dans la région du côté de bord d'attaque dans le déflecteur (70), les profondeurs de rainure (d) dans la pluralité de rainures (G) augmentent progressivement depuis le côté de bord d'attaque vers une position du pic de la profondeur de rainure (d) et diminue progressivement depuis la position du pic de la profondeur de rainure (d) vers le côté de bord de fuite, et
la position du pic de la profondeur de rainure (d) est ménagée dans une région correspondant à la position du pic de l'épaisseur de lame (T).

2. Unité intérieure selon la revendication 1, dans laquelle une différence entre un maximum et un minimum d'une épaisseur de base (t), qui est l'épaisseur entre des sections inférieures dans la pluralité de rainures (G) et la première surface (71), est inférieure à la différence entre un maximum et un minimum des profondeurs de rainure (d) dans la pluralité de rainures (G).

3. Unité intérieure selon la revendication 2, dans laquelle
dans la région située du côté de bord de fuite dans le déflecteur (70), l'épaisseur de lame (T) diminue progressivement vers le côté de bord de fuite, et
une position du maximum de l'épaisseur de base (t) est située dans la région du côté de bord de fuite et une position du minimum de l'épaisseur de base (t) est située dans la région du côté de bord d'attaque.
